# EUROPÄISCHE PATENTSCHRIFT

(11) **EP 3 568 576 B1**
(45) Veröffentlichungstag und Bekanntmachung des Hinweises auf die Patenterteilung: **09.08.2023**
(21) Anmeldenummer: 18700027.8
(22) Anmeldetag: 03.01.2018
(51) Int. Cl.: B60L 58/27

(54) **UMHAUSUNG, BILDEND EINEN HOHLRAUM ZUR AUFNAHME VON FLÜSSIGKEITEN ODER FESTEN KÖRPERN**
HOUSING, FORMING A HOLLOW SPACE FOR STORING A LIQUDE OR A SOLID STATE BODY
ENCEINTE, FORMANT UN ESPACE CREUX POUR LE STOCKAGE D'UN LIDUIDE OU D'UN CORPS SOLIDE

(30) Priorität: 10.01.2017 DE 102017100389; 29.12.2017 DE 102017131433
(43) Veröffentlichungstag der Anmeldung: 20.11.2019
(73) Patentinhaber: Arte Reverse Engineering GBR (Vertretungsberechtightigte Gesellschafter Alexander Reinisch, 99817 Eisenach), 98617 Vachdorf (DE)
(72) Erfinder: LANTZSCH, Heiko, 99817 Eisenach (DE); REINISCH, Alexander, 98617 Vachdorf (DE)
(74) Vertreter: Meissner Bolte Partnerschaft mbB
(86) Internationale Anmeldenummer: PCT/EP2018/050105
(87) Internationale Veröffentlichungsnummer: WO 2018/130438

(56) Entgegenhaltungen:
- DE-A1-102009 047 334
- DE-A1-102010 051 550

## Beschreibung

Die Erfindung betrifft eine Umhausung, bildend einen Hohlraum zur Aufnahme von Flüssigkeiten oder festen Körpern, wobei der Hohlraum mehrere elektrisch nicht-leitende Flächenabschnitte mit regelmäßiger oder unregelmäßiger geometrischer Gestalt aufweist und mindestens einer der Flächenabschnitte elektrisch beheizbar ist und über eine Leiterstruktur verfügt, welche mit einer Stromquelle verbindbar ist gemäß Oberbegriff des Anspruches 1.

Aus der DE 10 2014 015 714 A1 ist eine Heizeinrichtung für eine Vorrichtung zur Aufnahme und Bereitstellung von flüssigem Reduktionsmittel vorbekannt. Diese Vorrichtung besteht aus einem Tank und einem in den Tankinnenraum hineinreichenden, topfartigen Behältnis, wobei im Behältnis mindestens eine Fördereinheit für das Reduktionsmittel und ein Anschluss zur Abgabe des Reduktionsmittels vorgesehen ist. In einer Ausführungsform ist ein dortiger Moduleinsatz oder das Behältnis oder mindestens Teile des Tankbodens oder der dortigen Tankwandung mehrschichtig ausgebildet. Eine der Schichten nimmt elektrische Heizelemente auf oder es sind in mindestens eine der Schichten elektrische Heizelemente eingebettet.

Ebenfalls wird die Möglichkeit aufgezeigt, Tankboden und Behältnis einstückig zu fertigen und jeweils eine umspritzte Struktur von elektrischen Heizelementen vorzusehen.

Durch eine Segmentierung der Heizelemente in Heizleitergruppen besteht die Möglichkeit, entsprechend der jeweiligen Umgebungstemperaturen und der jeweiligen Einsatzbedingungen die Heizleistung zu steuern bzw. das Zuführen von Wärmeenergie auf bestimmte räumliche Bereiche innerhalb des Tanks zu konzentrieren. Dies dient beispielsweise dem schnellen Auftauen der Reduktionsflüssigkeit, um eine schnelle Inbetriebnahme der Anlage, insbesondere eines Kraftfahrzeugmotors, zu gewährleisten.

Die EP 1 667 400 A1 offenbart ein Kunststoffbauteil zum Erwärmen eines Fluids. Das Kunststoffbauteil besteht zumindest teilweise aus einem elektrisch leitfähigen Polymer. Aus der DE 10 2010 051 550 A1 ist eine konfektionierte, elektrisch beheizbare Medienleitung bekannt. Die DE 10 2009 047 334 A1 offenbart einen Tank mit mindestens einem elektrischen Heizelement sowie eine Abgasvorrichtung für eine Brennkraftmaschine mit einem derartigen elektrisch beheizbaren Tank.

Bei dem Flüssigkeitsfilter für Dieselkraftstoffe nach EP 0 250 720 A1 sind definierte Wandbereiche des Filtergehäuses als Filterheizung ausgeführt. Die Wandungen des Gehäuses können dabei ganz oder teilweise aus elektrisch leitfähigem Kunststoff bestehen.

Bei dem deutschen Gebrauchsmuster DE 20 2015 002 418 U1 wird von einem Kunststoff-Spritzguss-Formteil mit einer Wandung ausgegangen, wobei zumindest ein Teil der Wandung des Formteiles aus einem mit elektrisch leitenden Partikeln versetzten Kunststoff-Polymermaterial besteht, dessen Bahnwiderstand mit Anstieg der Temperatur des Kunststoff-Polymermaterials ansteigt, so dass sich eine PTC-Widerstandscharakteristik ergibt.

Unter einer PTC-Widerstandscharakteristik wird eine solche verstanden, bei der mit zunehmender Temperatur der elektrische Widerstand ansteigt.

In das Kunststoff-Polymermaterial sind nach DE 20 2015 002 418 U1 mindestens zwei metallische Elektroden mit Abstand voneinander eingebettet und mit Anschlussenden aus dem Kunststoff-Polymermaterial herausgeführt. Die Anschlussenden stehen mit einer geregelten Stromversorgung in Verbindung. Der Teil der Wandung stellt somit einen Heizabschnitt dar.

Es wird also die Wandung des Kunststoff-Spritzguss-Formteiles selbst als flächige Widerstandsheizung auf Basis eines mit elektrisch leitenden Partikein versetzten Kunststoff-Polymermaterials ausgebildet.

Mit anderen Worten wird das auf konstruktive Vorgaben ausgerichtete Kunststoff-Spritzguss-Formteil selbst zumindest in einem Abschnitt seiner Wandung als Heizleiter realisiert. Damit soll die Funktion bisher bekannter Heizbänder in die Wandung des Formteiles, in welcher Formgebung auch immer, integriert werden.

Es hat sich jedoch gezeigt, dass eine solche Integration eines bezogen auf die Heizcharakteristik optimierten Kunststoffmaterials nebst notwendigen elektrischen Leitern nachteilige Eigenschaften bezüglich der mechanischen Stabilität des gesamten Formteiles nach sich zieht. Allein durch nicht vermeidbare thermische Ausdehnung der notwendigen elektrischen Leiter zur Stromzuführung, die ebenfalls in die Wandung integriert sind, entstehen erhebliche mechanische Spannungen, die zu Spannungsrissen führen. Dies ist dann besonders kritisch, wenn beispielsweise aus dem genannten Kunststoff-Spritzguss-Material ein Formteil entsteht, das zur Aufnahme brennbarer Flüssigkeiten oder sonstiger gefährlicher Medien dient.

Aus dem Vorgenannten ist es daher Aufgabe der Erfindung, eine weiterentwickelte Umhausung, bildend einen Hohlraum zur Aufnahme von Flüssigkeiten oder festen Körpern anzugeben, wobei der Hohlraum mehrere, elektrisch nicht-leitende Flächenabschnitte aufweist und mindestens einer der Flächenabschnitte beheizbar ist. Unabhängig von der Möglichkeit der Beheizung soll die Umhausung allen notwendigen Anforderungen zur sicheren und dauerhaften Aufnahme der entsprechenden Medien dienen und darüber hinaus kostengünstig herstellbar und betriebssicher ausgeführt sein.

Die Lösung der Aufgabe der Erfindung erfolgt mit einer Merkmalskombination gemäß der Lehre nach Patentanspruch 1, wobei die Unteransprüche mindestens zweckmäßige Ausgestaltungen und Weiterbildungen darstellen.

Demnach wird von einer Umhausung ausgegangen, welche einen Hohlraum zur Aufnahme von Flüssigkeiten oder mindestens zeitweise festen Körpern bildet.

Der Hohlraum weist mehrere, elektrisch nicht-leitende Flächenabschnitte mit regelmäßiger oder unregelmäßiger geometrischer Gestalt auf. Die Flächenabschnitte können hier aus einem Kunststoff-Spritzgussmaterial bestehen.

Mindestens einer der Flächenabschnitte ist elektrisch beheizbar und verfügt über eine Leiterstruktur, welche mit einer Stromquelle verbindbar ist. Die Stromquelle muss hierbei nicht geregelt ausgeführt werden.

Erfindungsgemäß ist die Leiterstruktur auf der Außenseite des jeweiligen Flächenabschnittes angeordnet. Die Leiterstruktur wird mit einem elektrisch leitfähigen, einen positiven temperaturabhängigen Widerstand aufweisenden Kunststoffmaterial (PTC-Kunststoffmaterial) umgeben. Das PTC-Kunststoffmaterial bildet mit dem Material des jeweiligen Flächenabschnittes eine bauliche, nicht jedoch eine stoffliche Einheit. Weiterhin sind erfindungsgemäß am jeweiligen Flächenabschnitt Elemente zur Begrenzung der flächenmäßigen Ausdehnung des Kunststoffmaterials vorgesehen, welche insbesondere als entsprechende Begrenzung bei einem Umspritzvorgang dient.

Diesbezüglich weist der jeweilige Flächenabschnitt eine oder mehrere Vertiefungen als flächenmäßige Begrenzungen auf.

Im Bereich der Vertiefungen sind mindestens Teile der Leiterstruktur eingelegt oder insbesondere auf- oder eingedruckt. Die Leiterstruktur kann auch als ein leitfähiges textiles Gebilde, Gewebe oder Gestrick realisiert werden.

In einer bevorzugten Ausführungsform ist die Leiterstruktur als Flächenleitung ausgebildet, welche mit einer Oberflächenseite unmittelbar am jeweiligen Flächenabschnitt anliegt. Damit entsteht eine sehr innige, großflächige und enge Verbindung zwischen der betreffenden Oberflächenseite des Flächenleiters und dem zu beheizenden Flächenabschnitt.

Die Flächenleitungen werden dann durch Umspritzen mit dem PTC-Kunststoffmaterial fixiert, wobei die Flächenleitungen neben der Stromzuführung dem Herstellen eines optimalen Wärmetransportes von der Wärmequelle, PTC-Kunststoffmaterial, zur Wärmesenke, Hohlraum, dienen.

In einer Ausgestaltung der Erfindung ist das PTC-Kunststoffmaterial mit einer infrarote Strahlung reflektierenden Abdeckung oder einer sonstigen Schutzabdeckung versehen.

Die Abdeckung kann durch einen unmittelbaren Auftrag einer Schutzschicht, aber auch durch Vorsehen einer diskreten Abdeckung, zum Beispiel in Plattenform, realisiert werden.

Die Flächenabschnitte wie vorerwähnt bilden bevorzugt den Boden und mindestens eine Seitenwand der Umhausung.

Mindestens Teile der Leiterstruktur sind zur Vermeidung oder zur Ableitung einer elektrostatischen Aufladung der Umhausung, welche ansonsten elektrisch isolierend ist, vorgesehen.

Die angesprochenen Vertiefungen sind an mindestens der dem Hohlraum abgewandten Seite, das heißt der Außenseite des jeweiligen Flächenabschnittes ausgebildet.

Der Hohlraum bildet in einer bevorzugten Ausführungsform der Erfindung einen Flüssigkeitstank.

Ebenso kann der Hohlraum aber einen Akkumulator aufnehmen, das heißt Bestandteil eines Sekundärelementes sein, wodurch sich die Möglichkeit ergibt, eine Temperierung eines entsprechenden Akkumulators, insbesondere für Elektrofahrzeuge oder dergleichen Anwendungen, vorzusehen. Die Erfindung soll nachstehend anhand eines Ausführungsbeispieles sowie unter Zuhilfenahme von Figuren näher erläutert werden.

Hierbei zeigen:
- Fig. 1: eine Schnittdarstellung durch einen beispielhaften Tank zur Aufnahme von Flüssigkeiten, welcher aus zwei miteinander verbundenen oder verbindbaren Halbschalen besteht und wobei die untere Halbschale über die erfindungsgemäße Beheizung verfügt; und
- Fig. 2: eine Ausführungsform eines beheizbaren Gehäuses für eine Batterie, insbesondere ein Akkumulator bzw. für ein Sekundärelement.

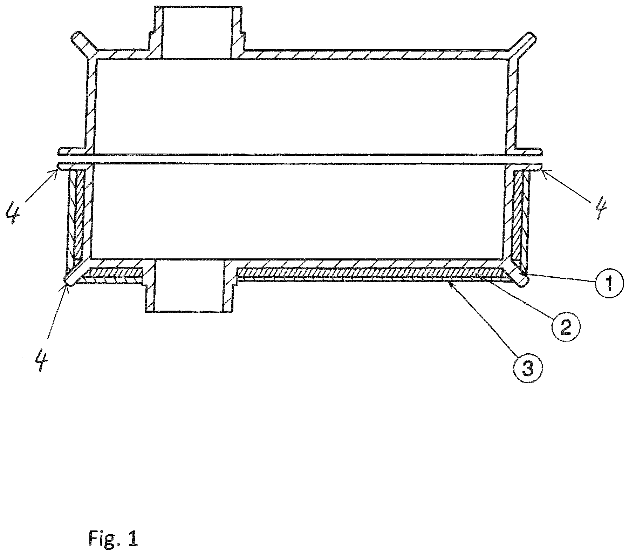

Gemäß der Darstellung nach Fig. 1 wird von einer Umhausung in Form eines Tanks 1 ausgegangen.

Der Tank 1 besteht aus einer oberen und einer unteren Halbschale und weist entsprechende Öffnungen zum Einbringen bzw. zum Entnehmen einer Flüssigkeit auf.

Das Material der Tankhalbschalen ist bevorzugt ein medienbeständiger Kunststoff.

Die Tankhalbschalen umschließen einen Hohlraum zur Aufnahme der entsprechenden Flüssigkeit.

Betrachtet man die untere Tankhalbschale nach Fig. 1, so weist diese mehrere Flächenabschnitte auf, insbesondere einen Tankboden und Tankseitenwände.

Bei der Ausführungsform nach Fig. 1 ist vorgesehen, dass die Seitenwände und der Boden der unteren Tankhalbschale beheizbar sind, um ein Einfrieren von im Tank befindlicher Flüssigkeit zu verhindern.

Erfindungsgemäß auf der Außenoberfläche der unteren Tankschale werden nicht dargestellte elektrische Leiter in Form einer Leiterstruktur angebracht. Dies kann beispielsweise durch Bedrucken erfolgen.

Im Anschluss daran werden diese nicht gezeigten elektrischen Leiter mit einem elektrisch leitfähigen, einen positiven temperaturabhängigen Widerstand aufweisenden Kunststoffmaterials umspritzt. Zur Begrenzung der umspritzenden Flächenabschnitte sind Elemente 4 vorhanden.

Diese Elemente 4 stehen zum jeweiligen Flächenabschnitt und Wandungsmaterial der unteren Tankschale hervor, so dass letztendlich ein Vertiefungsabschnitt gebildet wird, der den PTC-Kunststoff 2 aufnimmt.

Alle konstruktiven und mechanischen Eigenschaften des gezeigten Tanks werden für das Material der Tankhalbschalen und dessen Ausführung erfüllt. Dem PTC-Kunststoffmaterial kommt daher lediglich die Eigenschaft und die Aufgabe zu, für einen optimierten Wärmeeintrag auf das im Tank aufzunehmende Medium zu sorgen, welches insofern die Wärmesenke darstellt.

Das PTC-Kunststoffmaterial als Wärmequelle kann auch mit einer Infrarotstrahlung reflektierenden Abdeckung 3 versehen sein, so dass eine unerwünschte Wärmeabstrahlung in die Umgebung vermeidbar ist.

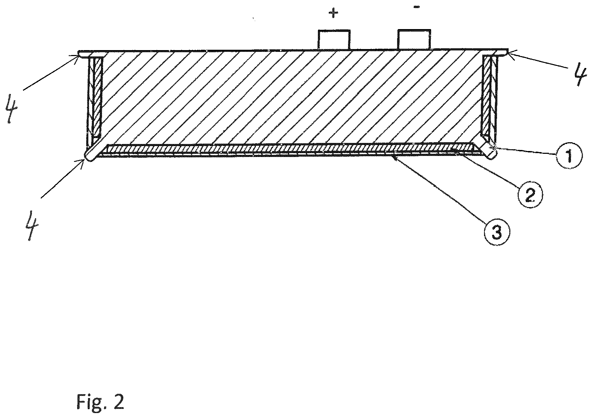

Bei der Darstellung gemäß Fig. 2 wird von einem Batteriegehäuse, insbesondere einem Akkumulatorgehäuse 1 ausgegangen. Dieses verfügt wiederum über eine Leiterstruktur und eine Schicht aus einem PTC-Kunststoffmaterial zum Zweck des Beheizens der Batterie. Dieses PTC-Kunststoffmaterial 2 wirkt bevorzugt einerseits thermisch isolierend bezogen auf die Batterieumgebung und sorgt in erfindungsgemäßer Weise für die notwendige Beheizung der Batterie 1 bei sinkender Umgebungstemperatur. Ebenfalls wie in der Fig. 1 dargestellt, ist auch bei der Ausführungsform nach Fig. 2 eine Schutzabdeckung 3 vorhanden, die zusätzlich über infrarote Strahlung reflektierende Eigenschaften verfügen kann.

## Patentansprüche

1. Umhausung (1), bildend einen Hohlraum zur Aufnahme von festen Körpern oder in Form eines Tanks zur Aufnahme von Flüssigkeiten, wobei der Hohlraum mehrere, elektrisch nicht-leitende Flächenabschnitte mit regelmäßiger oder unregelmäßiger geometrischer Gestalt aufweist und mindestens einer der Flächenabschnitte elektrisch beheizbar ist und über eine Leiterstruktur verfügt, welche mit einer Stromquelle verbindbar und mit einem elektrisch leitfähigen, einen PTC-Widerstand aufweisenden Kunststoffmaterial (2) umgeben ist,
**dadurch gekennzeichnet, dass**
die Leiterstruktur auf der Außenseite des Flächenabschnittes angeordnet ist, wobei am jeweiligen Flächenabschnitt Elemente (4) zur Begrenzung der flächenmäßigen Ausdehnung des Kunststoffmaterials (2) bei einem nachfolgenden Umspritzvorgang der Leiterstruktur mit dem Kunststoffmaterial (2) vorgesehen sind, und wobei das Kunststoffmaterial (2) mit dem Material des jeweiligen Flächenabschnittes eine bauliche, nicht jedoch stoffliche Einheit bildet.

2. Umhausung (1) nach Anspruch 1,
**dadurch gekennzeichnet, dass**
der jeweilige Flächenabschnitt eine oder mehrere Vertiefungen als flächenmäßige Begrenzungen aufweist.

3. Umhausung (1) nach Anspruch 2,
**dadurch gekennzeichnet, dass**
im Bereich der Vertiefungen mindestens Teile der Leiterstruktur eingelegt oder eingedruckt sind.

4. Umhausung (1) nach einem der vorangegangenen Ansprüche,
**dadurch gekennzeichnet, dass**
die Leiterstruktur als Flächenleitung ausgebildet ist, welche mit einer Oberflächenseite unmittelbar am jeweiligen Flächenabschnitt anliegt.

5. Umhausung (1) nach Anspruch 4,
**dadurch gekennzeichnet, dass**
die Flächenleitung durch das Umspritzen mit dem PTC-Kunststoffmaterial (2) fixiert wird, wobei die Flächenleitung neben der Stromzuführung dem Herstellen eines Wärmetransportes von der Wärmequelle, PTC-Kunststoffmaterial (2) zur Wärmesenke, Hohlraum dient.

6. Umhausung (1) nach einem der vorangegangenen Ansprüche,
**dadurch gekennzeichnet, dass**
das PTC-Kunststoffmaterial (2) mit einer infrarote Strahlung reflektierenden Abdeckung (3) versehen ist.

7. Umhausung (1) nach einem der vorangegangenen Ansprüche,
**dadurch gekennzeichnet, dass**
die Flächenabschnitte den Boden und mindestens eine Seitenwand der Umhausung bilden.

8. Umhausung (1) nach einem der vorangegangenen Ansprüche,
**dadurch gekennzeichnet, dass**
mindestens Teile der Leiterstruktur zur Vermeidung einer elektrostatischen Aufladung der Umhausung vorgesehen sind.

9. Umhausung (1) nach einem der Ansprüche 2 bis 8,
**dadurch gekennzeichnet, dass**
die mindestens eine Vertiefung an der dem Hohlraum abgewandten Seite des jeweiligen Flächenabschnittes ausgebildet ist.

10. Umhausung (1) nach einem der vorangegangenen Ansprüche,
**dadurch gekennzeichnet, dass**
der Hohlraum einen Flüssigkeitstank bildet.

11. Umhausung (1) nach einem der Ansprüche 1 bis 9,
**dadurch gekennzeichnet, dass**
der Hohlraum einen zu temperierenden Akkumulator aufnimmt oder Bestandteil eines Akkumulators ist.

## Claims

1. A housing (1), forming a hollow space for receiving solid bodies or in the form of a reservoir for receiving liquids, wherein the hollow space includes a plurality of electrically non-conducting surface sections having a regular or irregular geometric shape, and at least one of the surface sections can be electrically heated and has a conductor structure which is connectable to a current source and is surrounded by an electrically conducting synthetic material (2) comprising a PCT resistor,
**characterized in that**
the conductor structure is arranged on an outer side of the surface section, wherein elements (4) are provided on the respective surface section for delimiting the two-dimensional extension of the synthetic material (2) in case of a subsequent overmolding process of the conductor structure by means of the synthetic material (2), and wherein the synthetic material (2) forms a constructional but not substantial unit with the material of the respective surface section.

2. The housing (1) according to claim 1,
**characterized in that**
the respective surface section includes one or more recesses as the two-dimensional delimitations.

3. The housing (1) according to claim 2,
**characterized in that**
into the area of the recesses, at least parts of the conductor structure are inserted or imprinted.

4. The housing (1) according to any one of the preceding claims,
**characterized in that**
the conductor structure is formed as a two-dimensional line resting immediately against the respective surface section with a surface area side.

5. The housing (1) according to claim 4,
**characterized in that**
the two-dimensional line is fixed by overmolding with the PCT synthetic material (2), wherein, apart from the current supply, the two-dimensional line serves for establishing heat transportation from the current source, PCT synthetic material (2), to the heat sink, the hollow space.

6. The housing (1) according to any one of the preceding claims,
**characterized in that**
the PCT synthetic material (2) is provided with a cover (3) reflecting infrared radiation.

7. The housing (1) according to any one of the preceding claims,
**characterized in that**
the surface sections form the bottom and at least one side wall of the housing.

8. The housing (1) according to any one of the preceding claims,
**characterized in that**
at least parts of the conductor structure are provided for avoiding an electrostatic charging of the housing.

9. The housing (1) according to any one of claims 2 to 8,
**characterized in that**
the at least one recess is formed on the side of the respective surface section facing away from the hollow space.

10. The housing (1) according to any one of the preceding claims,
**characterized in that**
the hollow space forms a liquid reservoir.

11. The housing (1) according to any one of claims 1 to 9,
**characterized in that**
the hollow space receives an accumulator to be tempered or is a component of an accumulator.

## Revendications

1. Enceinte (1), formant un espace creux destiné à accueillir des corps solides ou se présentant sous la forme d'un réservoir destiné à accueillir des liquides, sachant que l'espace creux présente plusieurs sections de surface électriquement non conductrices à configuration géométrique régulière ou irrégulière et au moins une des sections de surface peut être chauffée électriquement et est dispose d'une structure de conducteur, laquelle peut être reliée à une source de courant et est entourée d'un matériau synthétique (2) électriquement conductible et présentant une résistance PTC,
**caractérisée en ce que**
la structure de conducteur est disposée sur le côté extérieur de la section de surface, sachant que des éléments (4) destinés à limiter l'extension surfacique du matériau synthétique (2) lors d'une opération de surmoulage consécutive de la structure de conducteur avec le matériau synthétique (2) sont prévus au niveau de la section de surface respective, et sachant que le matériau synthétique (2) forme une unité structurelle mais non matérielle avec le matériau de la section de surface respective.

2. Enceinte (1) selon la revendication 1,
**caractérisée en ce que**
la section de surface respective présente un ou plusieurs renfoncements comme limitations surfaciques.

3. Enceinte (1) selon la revendication 2,
**caractérisée en ce que**
au moins des parties de la structure de conducteur sont insérées ou imprimées dans la zone des renfoncements.

4. Enceinte (1) selon l'une des revendications précédentes,
**caractérisée en ce que**
la structure de conducteur est constituée comme conducteur surfacique, lequel est directement en contact avec la section de surface respective par un côté de surface.

5. Enceinte (1) selon la revendication 4,
**caractérisée en ce que**
le conducteur surfacique est fixé par le surmoulage avec le matériau synthétique en PTC (2), sachant que le conducteur surfacique sert, en plus de l'amenée de courant, à établir un transport de chaleur depuis la source de chaleur, matériau synthétique en PTC (2), au puits de chaleur, espace creux.

6. Enceinte (1) selon l'une des revendications précédentes,
**caractérisée en ce que**
le matériau synthétique en PTC (2) est pourvu d'un recouvrement (3) réfléchissant un rayonnement infrarouge.

7. Enceinte (1) selon l'une des revendications précédentes,
**caractérisée en ce que**
les sections de surface forment le fond et au moins une paroi latérale de l'enceinte.

8. Enceinte (1) selon l'une des revendications précédentes,
**caractérisée en ce que**
au moins des parties de la structure de conducteur sont prévues pour éviter un chargement électrostatique de l'enceinte.

9. Enceinte (1) selon l'une des revendications 2 à 8,
**caractérisée en ce que**
l'au moins un renfoncement est constitué au niveau du côté opposé à l'espace creux de la section de surface respective.

10. Enceinte (1) selon l'une des revendications précédentes,
**caractérisée en ce que**
l'espace creux forme un réservoir de liquide.

11. Enceinte (1) selon l'une des revendications 1 à 9,
**caractérisée en ce que**
l'espace creux accueille un accumulateur à tempérer ou fait partie intégrante d'un accumulateur.
